# EUROPEAN PATENT SPECIFICATION

(11) **EP 4 260 766 B1**
(45) Date of publication and mention of the grant of the patent: **12.11.2025**
(21) Application number: 22167976.4
(22) Date of filing: 12.04.2022
(51) Int. Cl.: C04B 111/00, A47G 19/02, C04B 41/52, C04B 41/90, C04B 111/80

(54) **TABLEWARE WITH A MIRROR FOR TREATING EATING DISORDERS**
GESCHIRR MIT EINEM SPIEGEL ZUR BEHANDLUNG VON ESSSTÖRUNGEN
VAISSELLE AVEC MIROIR POUR LE TRAITEMENT DES TROUBLES DE L'ALIMENTATION

(43) Date of publication of application: 18.10.2023
(73) Proprietor: Egorova, Maria, 65191 Wiesbaden (DE)
(72) Inventor: Egorova, Maria, 65191 Wiesbaden (DE)
(74) Representative: Blumbach · Zinngrebe Patentanwälte PartG mbB

(56) References cited:
- GB-A- 2 191 678
- JP-U- S 483 796
- US-A1- 2003 066 837
- ANONYMOUS: "Vintage Ceramic Mirror | eBay", 18 January 2021 (2021-01-18), XP055958596, Retrieved from the Internet <URL:https://www.ebay.co.uk/itm/333852941216?hash=item4dbb2f9ba0:g:ob4AAOSw0jJfEbuK> [retrieved on 20220907]
- DEZEEN: "Mirrored tableware tricks diners into thinking they're full", 8 September 2017 (2017-09-08), XP055958565, Retrieved from the Internet <URL:https://www.youtube.com/watch?v=eG5TK6HZ9q8&t=130s&ab_channel=Dezeen> [retrieved on 20220907]

## Description

### Field of the invention

The invention relates to a method of using a ceramic tableware with a mirror for improving the eating habits, especially for children. The invention further relates to the ceramic tableware itself and to a method for producing the tableware.

### BACKGROUND

Eating disorders are a common problem in children and may range from appetite loss to the more serious medical condition known as anorexia. The experts do not know exactly what causes appetite loss and anorexia. Some of the often-mentioned possible causes include strange behavioural patterns, brain chemical imbalances, family influences, social influences, and genetics. Therapy for appetite loss and anorexia often includes behavioural treatment and various nutritional rehabilitation methods.

For children some have proposed improving a child's eating habits through use of toy or decorative tableware such as plates, bowls, or cups. For example, CN88204406U describes a toy bowl for a baby, which claims to increase the appetite and intelligence of the baby. The bowl includes a device which can place a cartoon at the bottom of the bowl which is transparent so that the cartoon can be seen by the baby. The bottom is covered with food and only when the baby eats up the meals the cartoon can be seen. GB2191678A describes a decorated tableware for a child comprising a main body which is bottomless, a decorated disc which is insertable into the main body, and a base. The disc can be illuminated from the base by means of a bulb and a battery housed in the base.

JP2017/131264A describes a tableware with a message for inducing an infant to eat. It provides a bowl-shaped tableware including a food holding part, and a high base part downwardly projecting from the bottom of the food holding part. The tableware is such that the food holding part is formed by superposing an outside holding member and an inside holding member. A communication body is removably held between the outside holding member and the inside holding member, and at least part of the communication body is positioned between the bottom of the outside holding member and the bottom of the inside holding member. A connection part connects the holding members together.

KR10-2007-0130930A describes a tableware which includes a plurality of reflective surfaces for creating an illusion of more food placed on the plate than it actually is for helping the user to diet by reducing the actual amount of food placed on the tableware.

JP S48 3796 U discloses a tableware with a section having a mirror surface for improving the eating habits of a user.

The effectiveness of the above devices has been rather limited and there appears to be no practical, effective device or method for improving the eating habits of children. An improved device and method of improving the eating habits, especially for children is needed. Heretofore proposed tableware tends to be rather complex with rather limited effectiveness in changing a child's eating behavior.

The problem addressed by the present invention is that of providing a ceramic tableware such as a plate, bowl, cup and the like which is suitable for improving eating habits. The tableware is particularly suitable for treating or preventing appetite loss or anorexia in children but it is not only suitable for use by children. It can be used by children of all ages and also by adults who suffer from eating disorders or anorexia.

It has been surprisingly found that adding a mirror in the well area of a tableware such as a plate, bowl, cup and the like provides substantial improvement in the eating habits of the user of the plate by motivating the user to eat the food which is placed above the mirror area so that the user can see a mirror image of himself or herself by looking at the bottom of the tableware once the food is consumed by the user.

### Summary of the Invention

The present invention relates to the use of a ceramic tableware according to claim 1, a ceramic tableware according to claim 3 and a method for producing the ceramic tableware according to claim 11.

The user of the tableware may be a child, however the invention is not limited to children only. The improved eating habits may be related to any degree of an eating disorder ranging from a simple appetite loss to the more serious medical condition of anorexia.

Surprisingly, once the user consumes the food placed on the well area of the tableware and sees his own face image through the mirror a positive behavioural feedback is provided. This is due to a neurological stimulus which is generated in the user brain inducing the user to consume the food placed on the tableware the next time the user uses the tableware.

Psychological and neurophysiological studies on self-recognition in a human brain have found that the brain activity response to one's own face is markedly different from the response to familiar or unfamiliar non-self-faces. First, fMRI studies of the cortical networks have shown that self-face can be a positive representative stimulus for visual self-representation; the right inferior frontal, precentral, supramarginal, and bilateral ventral occipito-temporal cortices are highly responsive to self-face images. The results suggest that observed Blood-Oxygen-Level Dependence(BOLD)responses are possible evidence of face-specific visual self-representation. (cf. L. Uddin, J. Kaplan, I.Molnar-Szakacs, E. Zaidel,M. lacoboni, Self-face recognition activates a frontoparietal "mirror" network in the right hemisphere: an event- related fMRI study, Neurolmage 25 (3) (2005) 926-935. [26] C. Devue, F. Collette, E. Balteau, C. Degueldre, A. Luxen, P. Maquet, S. Bredart, Here I am: the cortical correlates of visual self-recognition, Brain Research 1143 (1) (2007) 169-182. [27] M. Sugiura, Y. Sassa, H. Jeong, K. Horie, S. Sato, R. Kawashima, Face-specific and domain-general characteristics of cortical responses during self-recognition, Neurolmage 42 (1) (2008) 414-422.)

The ceramic tableware may be any food eating or drinking container such as a plate, bowl, cup and the like. In an embodiment, the tableware may be a plate and the well area, which is the area where food can be placed for consumption, also includes a non-mirrored section which is positioned at the same level or at a higher level than the mirrored section. In other words, the mirror is only formed on a limited section of the well area and not in the whole well area of the plate. The mirror is preferably made of a silver or aluminum film.

The present invention is also directed to a ceramic tableware comprising a well area on which food can be placed, the well area including a mirror section and a non-mirrored section, wherein the mirror section is a flat and centrally positioned section of the well area of the ceramic tableware. The mirror section may include a silver film or an aluminum film mirror plated on the surface of the tableware, and wherein the non-mirrored section may be upwardly inclined forming an angle "a" with the plane of the mirror section of the well area of at least 5 degrees, preferably of at least 10 degrees, and more preferably of at least 15 degrees.

In an embodiment, the whole of the well area is metal plated using an electroless plating process with at least one metal selected from the group consisting of titanium, copper, nickel, chromium, zinc, and gold. The whole well area is metal plated using an electroless process and the silver or the aluminum film is formed on top of the metal plated substrate in the mirror section using another electroless deposition or electroplating. Preferably, the silver film or the aluminum film is formed on the metal plated substrate via electroplating.

In an embodiment, the non-mirrored section has a curved profile.

In an embodiment, the ceramic tableware is formed of porcelain and the forming of the silver or aluminum film in the mirrored section of the well area of the tableware includes the following operations:
a degreasing operation by placing the tableware inside a degreasing liquid at a temperature from 40 to 60 °C for a period of time from about 5 to about 15 minutes, washing with water and drying it with air;
a coarsening operation by placing the tableware inside a coarsening liquid for about 2-3 minutes at a room temperature;
a sensitization operation following the coarsening operation wherein the tableware is placed in a sensitizing liquid for a period of time from about 10 to about 15 minutes for making uneven points on the surface of the tableware;
an electroless plating operation following the sensitization operation wherein the ceramic tableware is immersed in an electroless plating liquid for a period of time from about 20 to about 30 minutes, while the temperature of the liquid is controlled at a room temperature for plating the well area with a metal selected from the group consisting of titanium, nickel, copper, chromium, zinc and gold; and
placing the ceramic tableware in an electroplating liquid for a period of time from about 25 to about 35 minutes and subjecting it to electrolysis inside an electrolysis device to form a silver film or an aluminum film on the mirror section of the well area of the ceramic tableware.

These and other features and advantages of the invention will become better understood from the following detailed description in conjunction with the following figures.

### Brief Description of the Drawings

Figure 1 is a simplified schematic representation of a plate according to an embodiment of the present invention.
Figure 2 is a simplified schematic representation of a plate according to another embodiment of the present invention.
Figure 3 is a simplified schematic of the mirrored section of the well area of the plate of figures 1 and 2 showing a ceramic substrate, a metal coating and a silver film according to an embodiment of the present invention.

### Detailed Description of the Invention

According to a first aspect of the invention there is provided a method of using a tableware for improving eating habits according to claim 1. According to the use method, the well area is covered with food after filling the tableware with food and the mirror in the well area is exposed only after emptying the tableware. The face of the user of the tableware is then reflected in it and the brain of the user receives a positive neural stimulus. Repeated use of the tableware improves the eating behavioural habits of the user and substantially reduces loss of appetite and anorexia. The tableware may be in the form of a plate, a bowl, a cup and the like. The tableware is made of a ceramic material, and more preferably is made of porcelain.

Although not desired to be bound by any particular theory, it has been reported that a specific positive psychological and neurophysiological response can be measured via electroencephalography in a human brain in response to seeing one's own face image. See, for example, the article entitled "Person authentication from neural activity of face-specific visual self-representation" published in Pattern Recognition 46 (2013) 1159-1169, at journal homepage Elsevier.com/locate/pr.

According to a second aspect of the invention there is provided a ceramic tableware comprising a well area which is partially mirrored as defined in claim 3. The mirror may be a silver film or an aluminum film mirror. A process for forming the mirror includes the following operations.

### i) Degreasing

The tableware is first degreased by placing it inside a degreasing liquid for an effective period of time while the temperature of the liquid is mildly heated. Preferably, the tableware is placed in a liquid having a temperature from 40 to 60 °C for a period of time from about 5 to about 15 minutes. The degreasing removes all kinds of oil stains from the surface of the tableware. The degreasing operation also includes removing the tableware from the degreasing liquid, washing with water and drying it with air using for example an air gun. Any suitable degreasing liquid may be used.

### ii) Coarsening

Following the degreasing operation, the tableware is put inside a coarsening liquid for a short period of time, for example for about 2-3 minutes and then it is removed from the coarsening liquid. Any coarsening liquid remaining on the surface of the tableware is removed by blowing air onto the tableware, for example, with an air gun, and then is cleaned with water. During the immersion of the tableware inside the coarsening liquid the temperature of the coarsening liquid may be at an ambient temperature. It is noted, however, that the invention is not limited by the temperature of the coarsening liquid. The coarsening liquid may be any suitable coarsening liquid

### iii) Sensitization

Following the coarsening operation the tableware is placed in a sensitizing liquid for a period of time from about 10 to about 15 minutes for making uneven points on the surface of the tableware, then it is taken out and any residual sensitizing liquid is removed by blowing air on it, for example using an air gun, and finally it is washed with water. The sensitizing liquid may be any suitable liquid.

### iv) Electroless plating

The ceramic tableware is then immersed in an electroless plating liquid for a period of time from about 20 to about 30 minutes, while the temperature of the liquid is controlled at a room temperature. The electroless liquid may be any suitable liquid. Via the electroless plating the well area of the ceramic eating tableware is plated with a metal such as for, example, titanium, nickel, copper, gold, silver and the like. In an embodiment the well area of the ceramic tableware is covered with titanium, nickel, or copper. Electroless plating of ceramic substrates is well known and thus, there is no need to be described herein in more detail.

### v) Electroplating

The ceramic tableware is then placed in an electroplating liquid for a period of time from about 25 to about 35 minutes and subjected to electrolysis inside an electrolysis device to form a silver film on the well area surface of the ceramic tableware. Preferably, the silver film is formed only on a section of the well area surface. More preferably, the silver film is formed only on a centrally positioned section of the well area surface for inducing the user to finish eating the food placed on the well area surface. The section of the well area surface where the silver film is placed is referred to herein also as the mirror section or mirror area of the plate. The mirror section allows the user to see an image of their face.

Hence, in an embodiment, after the electroless metal plating of the ceramic tableware with a metal, a silver film mirror is formed on top of the metal layer using electroplating. Preferably the silver film mirror is formed only on a section of the well area in order to induce the user to consume as much more of the food content placed on the well area before the user can see their face image in the mirror.

In an embodiment, after the electroless metal plating of the ceramic tableware with a metal, a silver film mirror is formed on top of the metal layer using a second electroless plating. Preferably the silver film mirror is formed only on a section of the well area in order to induce the user to consume as much more of the food content placed on the well area before the user can see their face image in the mirror.

The mirror section is flat in order to provide an accurate image of the face of the user to the user looking at the plate once the food covering the well surface area and in particular the mirror section is exposed, once the food is consumed by the user.

The mirror area is positioned at a same level or at a lower level than the remaining of the well area. Preferably, the mirror area is positioned at a lower level than the remaining of the well area. The mirror section is a flat, centrally positioned section of the well area of the ceramic tableware that may be positioned at a lower level than the remaining of the well area. More preferably, the mirror section is a flat, centrally positioned section of the well area with the remaining well area comprising an upwardly inclined section so that in order for the mirror section to be free of the food placed inside the well area, the user should consume all of the food placed on the well area of the tableware. The slope of the inclined section of the well area which is disposed at the perimetry of the mirror section may vary.

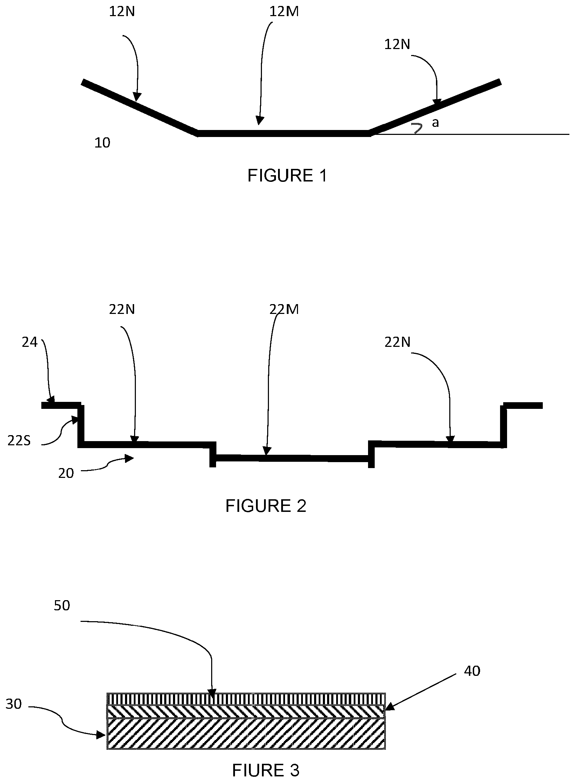

Figure 1 is a simplified cross-sectional view of a plate generally designated with numeral 10. The plate 10 is a ceramic plate, preferably a porcelain plate. The plate 10 includes a well area 12 which is the inside surface of the plate on which food is placed. The plate 10 may also include as an optional feature a lip (not shown) which is typically a flattish raised outer part of the plate. The well area 12 of the plate 10 according to the embodiment of figure 1 comprises a mirror section 12M and a non-mirrored section 12N. The mirror section 12M includes a silver film plated on the surface of the plate. The mirror section 12M is flat or substantially flat.

The non-mirrored section 12N of the plate 10 is upwardly inclined forming an angle "a" with the plane of the mirror section 12M of the well area 12. The angle "a" is preferably be at least 5 degrees, more preferably at least 10 degrees, and most preferably at least 15 degrees to force the food content inside the well are to slide toward the middle of the well area where the mirror section 12M is disposed. This way the mirror section 12M is covered with food unless all of the food or almost all of the food placed inside the well area is consumed by the user.

Preferably, the whole of the well area 12 (12M and 12N) is metal plated with at least one metal such as, for example, titanium, copper, nickel, chromium, zinc, gold, and the like using electroless plating. Other suitable metals may also be used. The mirror section 12M has the silver film formed on top of the metal plated porcelain substrate using electroplating, or electroless plating. In an embodiment, the silver film is formed on the metal plated substrate in the mirror section 12M of the well area 12 of the plate 10 using electroplating.

Although, the non-mirrored section 12N of the well area 12 of the embodiment of figure 1 is shown to have a constant slope, in a variation of this embodiment the slope of the non-mirrored section 12N may gradually increase from the border of the mirrored section 12M to the outermost border of the non-mirrored section 12N. Thus, in a variation of the embodiment of figure 1, the non-mirrored section 12N may have a curved profile.

Figure 2 shows a cross-sectional view of a plate 20 according to another embodiment of the present invention. The plate 20 is a ceramic plate, preferably a porcelain plate. Referring to FIG. 2 the mirror section 22M of the plate 20 is flat and positioned at a lower level than the level of the non-mirrored section 22N of the plate 20 which is also flat. The plate 20 also has a sidewall 22S which defines an outer border for the non-mirrored section 22N of the well area 22M, 22N of the plate 20. The plate 20 may further include an optional lip 24 which borders the sidewall 22S and extends outwardly. The lip may be flat or have some a small incline.

The mirror section (e.g., 12M, or 22M in figures 1 and 2) is of any suitable geometric shape including for example, a rectangle, square, rhombus, triangle, circle, pentagon and the like. The mirror section (e.g., 12M, or 22M in figures 1 and 2) is using a silver film for the mirror, however, in other embodiments, an aluminum film mirror may be used. The silver film mirror is preferred because of its overall better reflectivity than aluminum.

The described embodiments of figures 1 and 2 specify a mirrored section (12M, 22M) of the well area (12, 22) which is smaller than the available well area of the plate for the purpose of inducing the user to consume most or all of the food content placed on the table before the mirrored section is exposed. Repeated use of the plate by the user, especially a child user, induces the user to consume the food placed on the well area of the plate in order for the user to see the image of their face from the exposed mirror section of the plate and receive a positive neurological stimulus in their brain.

Figure 3 is a simplified schematic representation of the mirrored section 12M, 22M of the plates 10, 20 of figures 1 and 2 showing the ceramic substrate 30, the metal plated layer 40 formed on the ceramic substrate, and the silver film 50 formed on top of the metal plated layer 40. The thicknesses of the metal plated layer 40 and of the silver film may vary.

Although the embodiments of figures 1 and 2 illustrate a plate, in variations of the described embodiments which are easily envisaged by the skilled person in the art of the invention, the ceramic tableware is a bowl, a cup or any other shape food container. The food placed in the tableware may be solid or liquid.

According to another aspect of the present invention, a tableware such as a plate, bowl, or a cup with a mirror section having a silver film mirror formed in the well area of the tableware may be used for improving the eating habits of the user of the plate. The tableware is made of a ceramic material, preferably porcelain. The method includes using the tableware which includes the mirror section and is covered with food when filling the tableware with food and is exposed when the food is consumed, and allowing the exposed mirror reflecting to the user a mirror image of their face thus reinforcing a positive neural stimulus in the brain of the user.

The ceramic tableware according to an embodiment of the present invention may be used for the behavioural therapeutic treatment of an eating disorder of the user. The use includes filling the tableware with food to cover the mirror formed in the mirror section of the tableware, the user eating the food to expose the mirror section and the user viewing an image of the user's face in the mirror of the mirror section which generates a positive neurological stimulus to the brain of the user. The user is induced to repeat this process and by repeating the use of the ceramic tableware improves their eating habits, improve their appetite and reduce or prevent altogether loss of appetite and anorexia.

It has been discovered that repeated use by the user of the tableware with the mirror has a beneficial effect in preventing or reducing loss of appetite and anorexia. Although, the applicant does not wish to tie the invention to any particular underlying theory it is believed that the neurological stimulus or stimuli associated with seeing one's own image induce the tableware user to overcome their loss of appetite by a desire to expose the mirror area of the tableware so that they can receive the neurological stimuli associated with seeing a mirror image of their face.

Although the invention has been described with specific embodiments it should be understood that many other variations of the invention may be envisaged by the skilled person after having read the present disclosure which do not depart from the scope of the invention as defined in the following claims.

### List of Reference Numerals

- 10: plate
- 12M: mirror section of the well area of the plate
- 12N: non-mirrored section of the well area of the plate
- a: angle between the non-mirrored section and the plane of the mirror section
- 20: plate
- 22S: sidewall of the plate
- 22M: mirror section of the well area of the plate
- 22N: non-mirrored section of the well area of the plate
- 24: lip of the plate
- 30: ceramic substrate of the plate
- 40: metal plated layer
- 50: silver film

## Claims

1. Use of a ceramic tableware (10) for improving the eating habits of a user of the tableware (10), wherein the ceramic tableware includes a well area (12M, 12N) for adding food, wherein the well area includes a mirror section (12M) and a non-mirrored section (12N) and wherein a mirror is disposed in a mirror section (12M) of the well area, wherein the mirror section (22M) is a flat and centrally positioned section of the well area of the ceramic tableware,
wherein the mirror section is covered with food when filling the tableware with food and is exposed when the food is consumed, thus allowing the user to see an image of their face in the mirror,
by motivating the user to eat the food which is placed above the area so that the user can see a mirror image of himself or herself by looking at the bottom of the tableware once the food is consumed by the user.

2. The use of the ceramic tableware of claim 1, wherein the ceramic tableware is a plate (10), the well area also includes a non-mirrored section (12N) which is positioned at the same level or at a higher level than the mirrored section (12M), and the mirror is made of a silver film or aluminum film (50).

3. A ceramic tableware (10) comprising: a well area on which food can be placed, the well area including a mirror section (12M) and a non-mirrored section (12N), wherein the mirror section (22M) is a flat and centrally positioned section of the well area of the ceramic tableware.

4. The ceramic tableware of claim 3, wherein the mirror section includes a silver film or an aluminum film mirror (50) plated on the surface of the tableware, and wherein the non-mirrored section is upwardly inclined forming an angle "a" with the plane of the mirror section of the well area of at least 5 degrees, preferably of at least 10 degrees, and more preferably of at least 15 degrees.

5. The ceramic tableware of claims 3 or 4, wherein the whole of the well area is metal plated (40) using an electroless plating process with at least one metal selected from the group consisting of titanium, copper, nickel, chromium, zinc, and gold.

6. The ceramic tableware of claim 3, wherein the whole well area is metal plated using an electroless process and the silver or the aluminum film (50) is formed on top of the metal plated porcelain substrate (30) in the mirror section using electroplating.

7. The ceramic tableware of claim 3, wherein the non-mirrored section (12N) has a curved profile.

8. The ceramic tableware of claim 3, wherein the mirror section (22M) is a flat and centrally positioned section of the well area of the ceramic tableware.

9. The ceramic tableware of claim 8, wherein the mirror section (22M) is positioned at a lower level than the remaining of the well area.

10. The ceramic tableware of claim 9, wherein the remaining of the well area is comprising an upwardly inclined section so that in order for the mirror section (12M) to be free of food placed inside the well area, a user of the ceramic tableware should consume all of the food placed on the well area of the tableware.

11. A method to produce tableware according to any of the claims 4-10 wherein the ceramic tableware is made of porcelain and the forming of the silver or aluminum film (50) includes the following operations:
- a degreasing operation by placing the tableware inside a degreasing liquid at a temperature from 40 to 60 °C for a period of time from about 5 to about 15 minutes, washing with water and drying it with air;
- a coarsening operation by placing the tableware inside a coarsening liquid for about 2-3 minutes at a room temperature;
- a sensitization operation following the coarsening operation wherein the tableware is placed in a sensitizing liquid for a period of time from about 10 to about 15 minutes for making uneven points on the surface of the tableware;
- an electroless plating operation following the sensitization operation wherein the ceramic tableware is immersed in an electroless plating liquid for a period of time from about 20 to about 30 minutes, while the temperature of the liquid is controlled at a room temperature for plating the well area with a metal selected from the group consisting of titanium, nickel, copper, chromium, zinc and gold; and
- placing the ceramic tableware in an electroplating liquid for a period of time from about 25 to about 35 minutes and subjecting it to electrolysis inside an electrolysis device to form a silver film or an aluminum film on the mirror section of the well area of the ceramic tableware.

12. The ceramic tableware of any of the claims 3-10, wherein the ceramic table ware is used for the behavioural prevention of an eating disorder or a behavioural treatment of an eating disorder by a user.

13. The ceramic table ware of claim 12, wherein the user is a child.

14. The ceramic table ware of claims 12 or 13, wherein the eating disorder is loss of appetite or anorexia.

## Patentansprüche

1. Verwendung eines keramischen Tafelgeschirrs (10) zur Verbesserung der Essgewohnheiten eines Benutzers des Tafelgeschirrs (10), wobei das keramische Tafelgeschirr einen Vertiefungsbereich (12M, 12N) zum Aufbringen von Nahrungsmitteln umfasst, wobei der Vertiefungsbereich einen Spiegelabschnitt (12M) und einen nicht verspiegelten Abschnitt (12N) umfasst und wobei in einem Spiegelabschnitt (12M) des Vertiefungsbereichs ein Spiegel angeordnet ist, wobei der Spiegelabschnitt (22M) ein ebener und mittig angeordneter Abschnitt des Vertiefungsbereichs des keramischen Tafelgeschirrs ist,
wobei der Spiegelabschnitt beim Befüllen des Tafelgeschirrs mit Nahrungsmitteln bedeckt wird und beim Verzehr der Nahrungsmittel freigelegt wird, wodurch der Benutzer ein Bild seines Gesichts in dem Spiegel sehen kann,
indem der Benutzer dazu motiviert wird, die auf dem Bereich angeordneten Nahrungsmittel zu essen, so dass der Benutzer durch einen Blick auf den Boden des Tafelgeschirrs ein Spiegelbild von sich selbst sehen kann, sobald er die Nahrungsmittel verzehrt hat.

2. Verwendung des keramischen Tafelgeschirrs nach Anspruch 1, wobei das keramische Tafelgeschirr ein Teller (10) ist, wobei der Vertiefungsbereich außerdem einen nicht verspiegelten Abschnitt (12N) umfasst, der auf gleicher Höhe wie der verspiegelte Abschnitt (12M) oder höher angeordnet ist, und wobei der Spiegel aus einer Silberschicht oder Aluminiumschicht (50) besteht.

3. Keramisches Tafelgeschirr (10), umfassend: einen Vertiefungsbereich, auf dem Nahrungsmittel platziert werden können, wobei der Vertiefungsbereich einen Spiegelabschnitt (12M) und einen nicht verspiegelten Abschnitt (12N) umfasst, wobei der Spiegelabschnitt (12M) ein ebener und mittig angeordneter Abschnitt des Vertiefungsbereichs des keramischen Tafelgeschirrs ist.

4. Keramisches Tafelgeschirr nach Anspruch 3, wobei der Spiegelabschnitt einen Spiegel (50) aus einer Silberschicht oder Aluminiumschicht umfasst, die auf der Oberfläche des Tafelgeschirrs abgeschieden ist, und wobei der nicht verspiegelte Abschnitt nach oben geneigt ist und mit der Ebene des Spiegelabschnitts des Vertiefungsbereichs einen Winkel "a" von mindestens 5 Grad, vorzugsweise von mindestens 10 Grad und weiter bevorzugt von mindestens 15 Grad bildet.

5. Keramisches Tafelgeschirr nach Anspruch 3 oder 4, wobei der gesamte Vertiefungsbereich mittels eines stromlosen Plattierungsverfahrens mit mindestens einem Metall, ausgewählt aus der Gruppe, bestehend aus Titan, Kupfer, Nickel, Chrom, Zink und Gold, metallplattiert (40) ist.

6. Keramisches Tafelgeschirr nach Anspruch 3, wobei der gesamte Vertiefungsbereich mittels eines stromlosen Verfahrens metallplattiert ist und die Silber- oder Aluminiumschicht (50) auf dem metallplattierten Porzellansubstrat (30) in dem Spiegelabschnitt mittels Galvanisierung ausgebildet ist.

7. Keramisches Tafelgeschirr nach Anspruch 3, wobei der nicht verspiegelte Abschnitt (12N) ein gekrümmtes Profil aufweist.

8. Keramisches Tafelgeschirr nach Anspruch 3, wobei der Spiegelabschnitt (22M) ein ebener und mittig angeordneter Abschnitt des Vertiefungsbereichs des keramischen Tafelgeschirrs ist.

9. Keramisches Tafelgeschirr nach Anspruch 8, wobei der Spiegelabschnitt (22M) auf einer niedrigeren Höhe als der restliche Vertiefungsbereich angeordnet ist.

10. Keramisches Tafelgeschirr nach Anspruch 9, wobei der restliche Vertiefungsbereich einen nach oben geneigten Abschnitt umfasst, so dass ein Benutzer des keramischem Tafelgeschirrs sämtliche in den Vertiefungsbereich eingebrachten Nahrungsmittel verzehren muss, damit der Spiegelabschnitt (12M) von den in den Vertiefungsbereich eingebrachten Nahrungsmitteln befreit wird.

11. Verfahren zur Herstellung von Tafelgeschirr nach einem der Ansprüche 4 bis 10, wobei das keramische Tafelgeschirr aus Porzellan besteht und das Ausbilden der Silber- oder Aluminiumschicht (50) die folgenden Vorgänge umfasst:
- einen Entfettungsvorgang, bei dem das Tafelgeschirr für einen Zeitraum von etwa 5 bis etwa 15 Minuten in eine Entfettungsflüssigkeit mit einer Temperatur von 40 bis 60 °C gelegt, mit Wasser gespült und mit Luft getrocknet wird,
- einen Aufrauvorgang, bei dem das Tafelgeschirr etwa 2 bis 3 Minuten lang bei Raumtemperatur in eine Aufrauflüssigkeit gelegt wird,
- einen Sensibilisierungsvorgang im Anschluss an den Aufrauvorgang, bei dem das Tafelgeschirr für einen Zeitraum von etwa 10 bis etwa 15 Minuten in eine Sensibilisierungsflüssigkeit gelegt wird, um Unebenheiten auf der Oberfläche des Tafelgeschirrs zu erzeugen,
- einen stromfreien Plattierungsvorgang im Anschluss an den Sensibilisierungsvorgang, bei dem das keramische Tafelgeschirr für einen Zeitraum von etwa 20 bis etwa 30 Minuten in eine stromlose Plattierungsflüssigkeit eingetaucht wird, während die Temperatur der Flüssigkeit auf Raumtemperatur geregelt wird, um den Vertiefungsbereich mit einem Metall zu beschichten, das ausgewählt wird aus der Gruppe bestehend aus Titan, Nickel, Kupfer, Chrom, Zink und Gold, und
- Einlegen des keramischen Tafelgeschirrs in eine Galvanikflüssigkeit für einen Zeitraum von etwa 25 bis etwa 35 Minuten und Unterziehen des Tafelgeschirrs einer Elektrolyse in einer Elektrolysevorrichtung, um auf dem Spiegelabschnitt des Vertiefungsbereichs des keramischen Tafelgeschirrs eine Silberschicht oder eine Aluminiumschicht auszubilden.

12. Keramisches Tafelgeschirr nach einem der Ansprüche 3 bis 10, wobei das keramische Tafelgeschirr von einem Benutzer zur verhaltensbezogenen Prävention einer Essstörung oder einer verhaltensbezogenen Behandlung einer Essstörung verwendet wird.

13. Keramisches Tafelgeschirr nach Anspruch 12, wobei der Benutzer ein Kind ist.

14. Keramisches Tafelgeschirr nach Anspruch 12 oder 13, wobei die Essstörung Appetitverlust oder Anorexie ist.

## Revendications

1. Utilisation d'une vaisselle en céramique (10) pour améliorer les habitudes alimentaires d'un utilisateur de la vaisselle (10), la vaisselle en céramique comprenant une zone de cuvette (12M, 12N) pour ajouter de la nourriture, la zone de cuvette comprenant une section miroir (12M) et une section non miroir (12N), et un miroir étant disposé dans une section miroir (12M) de la zone de cuvette, la section miroir (22M) étant une section plate et centrée de la zone de cuvette de la vaisselle en céramique,
la section miroir étant couverte de nourriture lorsque la vaisselle est rempli de nourriture et exposée lorsque la nourriture est consommée, permettant ainsi à l'utilisateur de voir une image de son visage dans le miroir,
en motivant l'utilisateur à manger la nourriture placée au-dessus de la zone de sorte que l'utilisateur puisse voir un reflet de lui-même en regardant le fond de la vaisselle une fois que la nourriture est consommée par l'utilisateur.

2. Utilisation de la vaisselle en céramique selon la revendication 1, la vaisselle en céramique étant une assiette (10), la zone de cuvette comprenant également une section non miroir (12N) positionnée au même niveau ou à un niveau supérieur à la section miroir (12M), et le miroir étant constitué d'un film d'argent ou d'un film d'aluminium (50).

3. Une vaisselle en céramique (10), comprenant: une zone de cuvette sur laquelle de la nourriture peut être placée, la zone de cuvette comprenant une section miroir (12M) et une section non miroir (12N), la section miroir (22M) étant une section plate et centrée de la zone de cuvette de la vaisselle en céramique.

4. La vaisselle en céramique selon la revendication 3, la section miroir comprenant un miroir en film d'argent ou film d'aluminium (50) plaqué sur la surface de la vaisselle, et la section non miroir étant inclinée vers le haut formant un angle "a" avec le plan de la section miroir de la zone de cuvette d'au moins 5 degrés, de préférence d'au moins 10 degrés et plus préférablement d'au moins 15 degrés.

5. La vaisselle en céramique selon la revendication 3 ou 4, la totalité de la zone de cuvette étant plaquée de métal (40) à l'aide d'un procédé de plaquage autocatalytique avec au moins un métal choisi dans le groupe constitué par le titane, le cuivre, le nickel, le chrome, le zinc et l'or.

6. La vaisselle en céramique selon la revendication 3, la totalité de la zone de cuvette étant plaquée de métal en utilisant un procédé autocatalytique, et le film d'argent ou d'aluminium (50) étant formé sur le dessus du substrat en porcelaine (30) plaqué de métal dans la section miroir à l'aide d'un placage électrolytique.

7. La vaisselle en céramique selon la revendication 3, la section non miroir (12N) présentant un profil courbé.

8. La vaisselle en céramique selon la revendication 3, la section miroir (22M) étant une section plate et centrée de la zone de cuvette de la vaisselle en céramique.

9. La vaisselle en céramique selon la revendication 8, la section miroir (22M) étant positionnée à un niveau inférieur à celui du reste de la zone de cuvette.

10. La vaisselle en céramique selon la revendication 9, le reste de la zone de cuvette comprenant une section inclinée vers le haut de sorte que pour que la section miroir (12M) soit exempte de nourriture placée à l'intérieur de la zone de cuvette, un utilisateur de la vaisselle en céramique doit consommer toute la nourriture placée sur la zone de cuvette de la vaisselle.

11. Un procédé de fabrication d'une vaisselle selon l'une quelconque des revendications 4 à 10, la vaisselle en céramique étant constitué de porcelaine et la formation du film d'argent ou d'aluminium (50) comprenant les opérations suivantes:
- une opération de dégraissage en plaçant la vaisselle dans un liquide de dégraissage à une température de 40 à 60 °C pendant une durée d'environ 5 à 15 minutes, en lavant avec de l'eau et en séchant avec de l'air;
- une opération de rugosification en plaçant la vaisselle dans un liquide de rugosification pendant environ 2 à 3 minutes à température ambiante;
- une opération de sensibilisation suivant l'opération de rugosification, dans laquelle la vaisselle est placée dans un liquide de sensibilisation pendant une durée d'environ 10 à environ 15 minutes pour créer des points irréguliers sur la surface de la vaisselle;
- une opération de plaquage autocatalytique suivant l'opération de sensibilisation, dans laquelle la vaisselle en céramique est immergée dans un liquide de plaquage autocatalytique pendant une durée d'environ 20 à environ 30 minutes, tandis que la température du liquide est contrôlée à température ambiante pour plaquer la zone de cuvette avec un métal choisi dans le groupe constitué par le titane, le nickel, le cuivre, le chrome, le zinc et l'or;
- placer la vaisselle en céramique dans un liquide de placage électrolytique pendant une durée d'environ 25 à environ 35 minutes et la soumettre à l'électrolyse dans un dispositif d'électrolyse pour former un film d'argent ou un film d'aluminium sur la section miroir de la zone de cuvette de la vaisselle en céramique.

12. La vaisselle en céramique selon l'une quelconque des revendications 3 à 10, la vaisselle en céramique étant utilisé pour la prévention comportementale d'un trouble alimentaire par un utilisateur.

13. La vaisselle en céramique selon la revendication 12, l'utilisateur étant un enfant.

14. La vaisselle en céramique selon la revendication 12 ou 13, le trouble alimentaire étant une perte d'appétit ou l'anorexie.
